Europäisches Patentamt

European Patent Office

Office européen des brevets

(19)

(11) Numéro de publication: **0 206 889**
**B1**

(12) **FASCICULE DE BREVET EUROPEEN**

(45) Date de publication du fascicule du brevet: **03.10.90**

(51) Int. Cl.⁵: **A 01 F 15/00**

(21) Numéro de dépôt: **86401207.5**

(22) Date de dépôt: **05.06.86**

(54) Dispositif pour l'éjection de balles de fourrage sur une presse à balles rondes.

(30) Priorité: **19.06.85 FR 8509321**

(43) Date de publication de la demande:
**30.12.86 Bulletin 86/52**

(45) Mention de la délivrance du brevet:
**03.10.90 Bulletin 90/40**

(84) Etats contractants désignés:
**DE FR GB IT NL**

(56) Documents cités:
**EP-A-0 104 510**
**EP-A-0 110 056**
**FR-A-2 546 368**
**GB-A-2 138 354**

(73) Titulaire: **HESSTON BRAUD**
**F-85220 COEX (FR)**

(72) Inventeur: **Renaud, Loic**
**Les Portes Rouges Commequiers**
**F-85220 Coex (FR)**

(74) Mandataire: **Clanet, Denis et al**
**Cabinet Beau de Loménie 55, rue d'Amsterdam**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet un dispositif pour l'éjection de balles de fourrage sur une presse à balles rondes.

On connaît des machines agricoles qui assurent le ramassage du foin ou de la paille sur le sol et son pressage dans une chambre pour la formation d'une balle ronde ou cylindrique qui est ensuite liée puis éjectée.

Ces machines comprennent un châssis se déplaçant sur le sol au moyen de deux roues et sur lequel est monté rotatif à sa partie inférieure un organe de ramassage du foin coupé, ledit châssis portant à sa partie supérieure des moyens délimitant une chambre de formation de balles rondes de tous types de récolte.

Pour éjecter une balle terminée, il faut ouvrir la porte AR de la presse de telle sorte que la balle tombe sur le sol sous la porte arrière.

Avant de refermer la porte, il est nécessaire de faire effectuer une marche avant à la machine pour ne pas heurter la balle lors de la fermeture de la porte. Du fait de cette marche avant pendant laquelle il n'y a pas de ramassage, il faut préalablement à ces manoeuvres prendre certaines précautions pour ne pas laisser une partie de l'andain sur le sol.

Actuellement, lorsque la balle est terminée et le ficelage effectué, l'opérateur arrête la prise de force du tracteur, effectue une marche arrière de quelques mètres, puis commande l'ouverture hydraulique de la porte arrière de la presse.

Cette marche arrière est nécessaire, afin de permettre la marche avant après l'éjection de la balle, pour ne pas empiéter sur l'andain avant de commencer la balle suivante.

Le dispositif suivant l'invention a pour but de réaliser l'éjection de la balle sans avoir à effectuer une marche arrière et avant.

On connaît du document FR-A-2 546 368 une presse à balles rondes conforme au préambule de la revendication 1, mais cette presse est dépourvue de dispositif pour l'éjection des balles de fourrage.

On connaît par ailleurs du document GB-A-2 138 354 une presse à balles rondes dotée de rampes de roulement articulées sur le châssis et rappelées en position relevée au moyen d'un ressort, mais cette presse est dépourvue de moyens de relevage entre son châssis et ses roues.

Conformément à l'invention, un dispositif pour l'éjection de balles pour une presse conforme au préambule de la revendication 1 est caractérisée en ce qu'il comprend un second levier, monté sur l'axe d'articulation du premier levier, présentant un premier bras sur lequel est articulée l'une des extrémités d'une rampe de roulement de la balle et un second bras décalé angulairement par rapport au premier et sur lequel est articulée une tige montée coulissante dans un organe de guidage fixé sur la rampe de roulement, ladite tige portant une butée contre laquelle est en appui l'une des extrémités d'un ressort disposé autour de la tige, l'autre extrémité du ressort étant en appui contre l'organe de guidage.

Ce dispositif permet de supprimer les manoeuvres de marche avant et arrière de la machine pour éjecter la balle et, de ce fait, le rendement de la machine est augmenté, puisque le temps d'arrêt est diminué.

Par ailleurs, il diminue la fatigue de l'opérateur, car ce dispositif permet de supprimer les deux opérations de commande de marche avant et de marche arrière qui ont lieu habituellement toutes les deux minutes environ.

D'autres caractéristiques et avantages de l'invention seront mieux compris à la lecture de la description qui va suivre de plusieurs modes de réalisation et en se référant aux dessins annexés, sur lesquels:

la figure 1 est une vue en élévation latérale d'une presse à balles en position de ramassage et de formation de la balle;

la figure 2 est une même vue qu'à la figure 1 de la presse en position de déchargement de la balle;

la figure 3 est une même vue qu'à la figure 1 de la presse après le déchargement de la balle;

la figure 4 est un schéma des circuits hydrauliques de commande de la porte arrière et du relevage de la machine, comportant un clapet piloté;

la figure 5 est un autre schéma des circuits hydrauliques constituant une variante avec distributeur à commande électrique;

la figure 6 est une vue en élévation d'un mode de réalisation du dispositif d'éjection de balles pendant le déchargement de la balle; et

la figure 7 est une vue du dispositif après éjection de la balle.

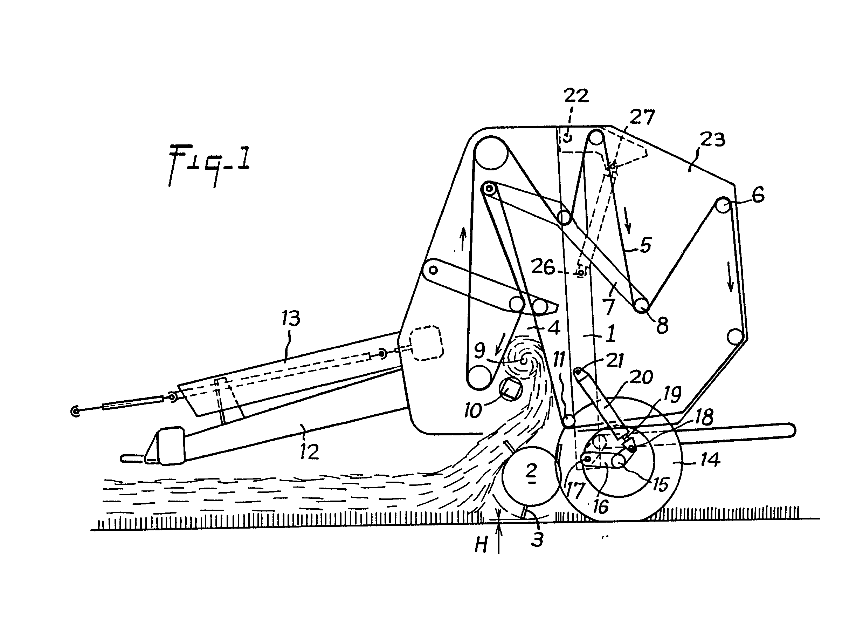

Aux figures 1, 2 et 3, on a représenté une machine destinée au ramassage et au pressage de balles de foin rondes ou cylindriques qui comprend un châssis 1 sur lequel est monté rotatif à sa partie inférieure un organe de ramassage du foin constitué d'un cylindre 2 qui est muni sur son pourtour de dents 3.

A sa partie supérieure, le châssis 1 porte des moyens délimitant une chambre 4 de formation d'une balle de foin ronde 9, lesdits moyens étant constitués d'une bande flexible ou de plusieurs lanières plates sans fin 5 entraînées en translation et guidées par des rouleaux tels que 6 dont certains 8 sont montés sur des leviers 7 articulés sur le bâti afin de permettre le déplacement desdits rouleaux 8 au fur et à mesure de la formation de la balle 9 par enroulement et de l'augmentation du volume de la chambre 4 et de la balle 9.

A la partie inférieure de la chambre 4 sont disposés un rouleau porteur 10 de la balle et un rouleau de bas de porte 11.

A l'avant du châssis 1 est fixé un timon 12 par lequel la machine est attelée à un tracteur qui est relié par un arbre rotatif 13 aux différents organes de la machine qu'il est nécessaire d'entraîner et par des conduits à la centrale hydraulique de fluide sous pression alimentant les accessoires de la machine et notamment les vérins.

La machine se déplace sur le sol au moyen de deux roues 14 disposées de chaque côté de la machine. Chaque roue 14 est montée rotative sur une fusée 15 fixée dans la partie médiane d'un premier levier 16 dont l'une des extrémités est montée pivotante autour d'un axe 17 sur la partie inférieure d'un montant du châssis 1 et dont l'autre extrémité est reliée par un axe d'articulation 18 à la chape d'une tige de vérin 19 dont le corps 20 est articulé autour d'un axe 21 sur le montant du châssis 1, ledit axe 21 étant situé à un niveau supérieur à l'axe 17 de pivotement du bras 16 sur le montant du châssis 1.

Les points de pivotement 17, 18 du premier levier sur le châssis et sur le vérin et le point 15 de fixation de la fusée sur le bras sont disposés aux sommets d'un triangle.

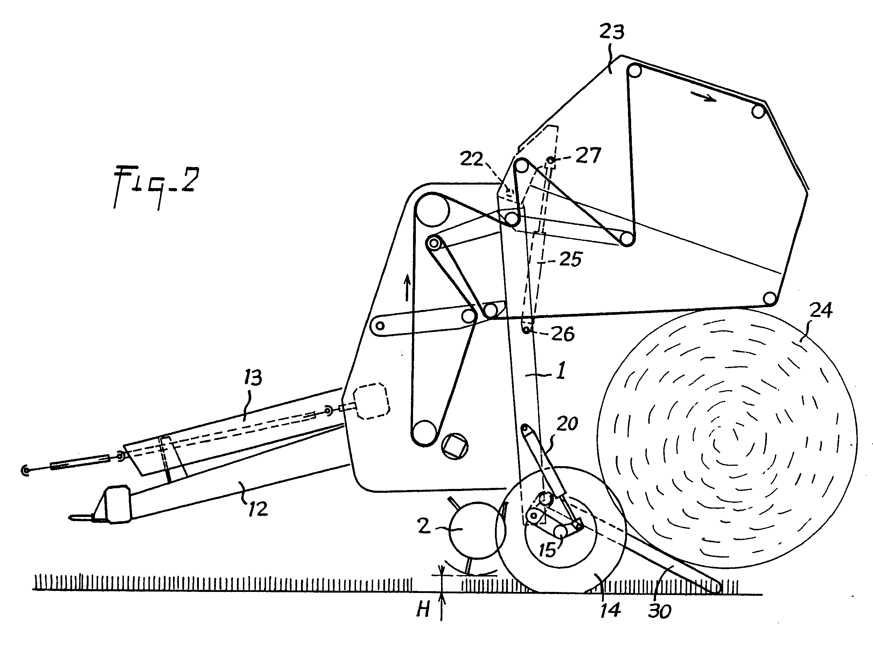

A la partie supérieure du châssis 1 est articulée autour d'un axe 22 une porte arrière 23 qui délimite en partie la chambre 4 et permet la sortie de la balle terminée 24 lorsque ladite porte est soulevée, comme représenté à la figure 2.

La porte arrière 23 est actionnée par deux vérins 25 qui sont montés de façon articulée à l'une de leurs extrémités en 26 sur le châssis 1 et à leur autre extrémité en 27 sur la porte 23.

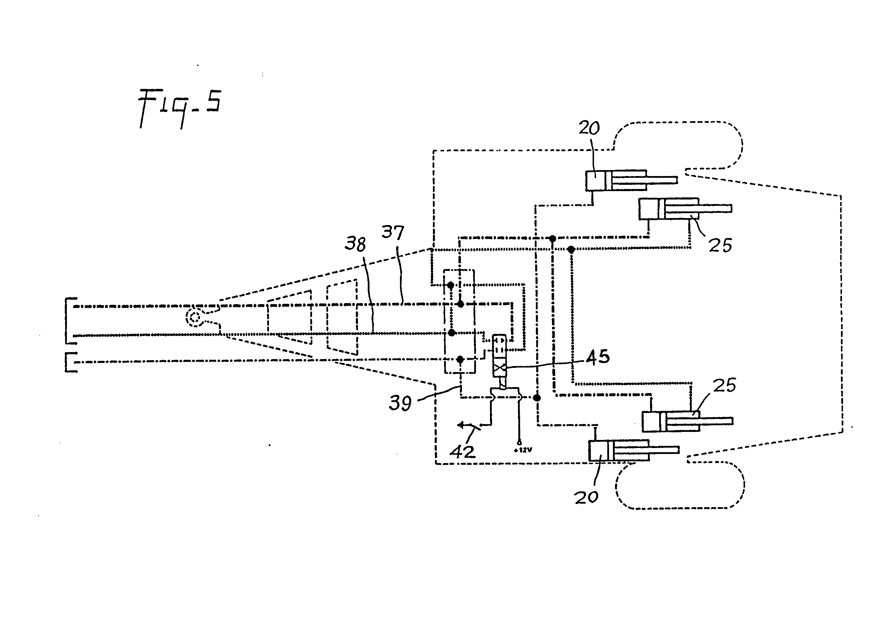

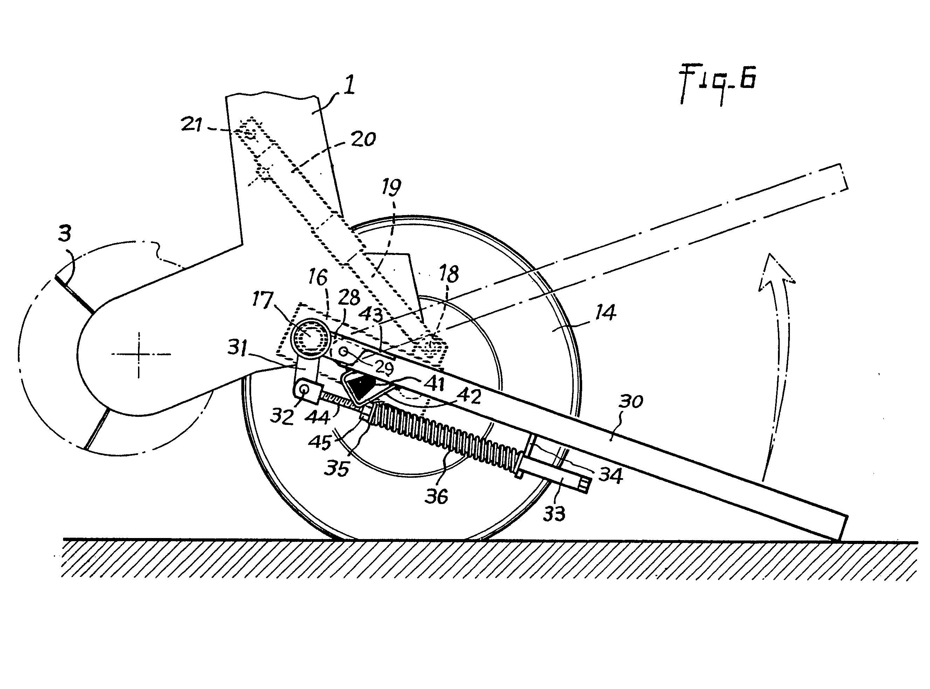

Le dispositif d'éjection de la balle est constitué d'un second levier (figures 5, 6) monté sur l'axe 17 fixé sur le châssis 1, ledit second levier présentant un bras 28 sur lequel est articulée autour d'un axe 29 l'une des extrémités de l'une des deux rampes 30 de roulement de la balle et présentant un autre bras 31 décalé angulairement par rapport au bras 28 et sur lequel est articulée autour d'un axe 32 une tige 33 montée coulissante dans un organe de guidage 34 fixé sur la rampe 30.

Le dispositif comprend deux rampes 30 qui sont indépendantes l'une de l'autre et situées de chaque côté de la machine.

La tige 33 porte une butée 35 contre laquelle est en appui l'une des extrémités d'un ressort 36 disposé autour de la tige 33 et dont l'autre extrémité est en appui contre l'organe de guidage 34.

La longueur de la tige 33, et donc l'effort de compression du ressort 36, est réglable grâce à une partie filetée 44 qui s'articule en 32 sur le levier 31 et qui se visse dans la tige 33 du côté de la butée 35, et se bloque au moyen d'un contre-écrou 45.

Une butée élastique 41 est fixée latéralement à la rampe sur un support 42 soudé sur ladite rampe, de façon à pouvoir venir en appui sous un prolongement 43 du levier 28 lorsque la rampe 30 est en position relevée.

Les vérins 25 de commande de la porte 23 sont à double effet et ils sont reliés par des circuits hydrauliques d'ouverture 37 et de fermeture 38 de porte à un distributeur de commande double effet placé sur le tracteur.

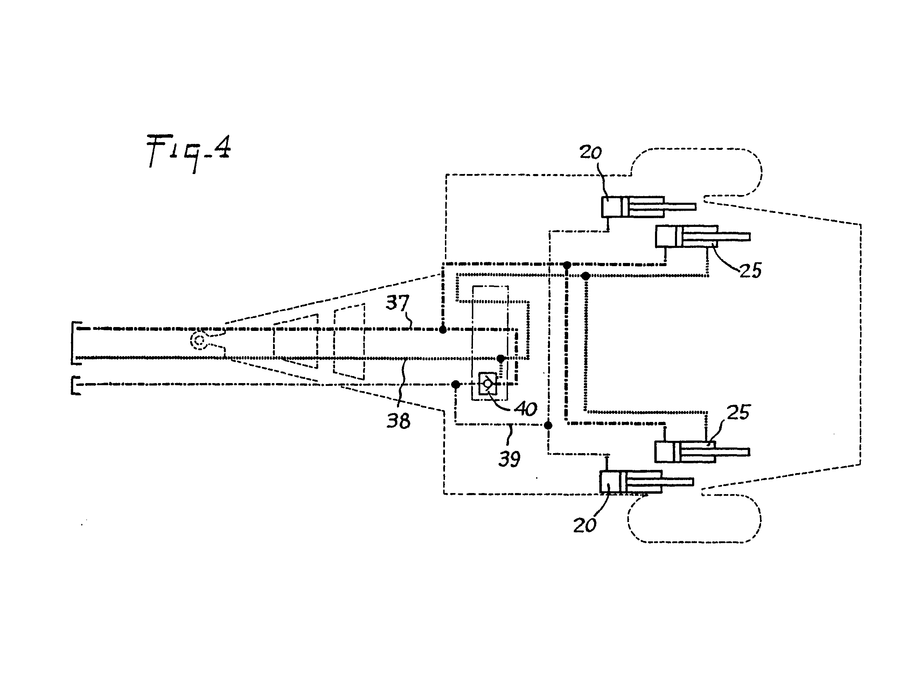

Les vérins 20 de relevage du châssis 1 sont à simple effet et ils sont reliés à un circuit hydraulique 39 raccordé à un distributeur de commande simple effet placé également sur le tracteur. Selon le mode de réalisation représenté à la figure 4, ce circuit hydraulique 39 comporte également un clapet 40 piloté par le circuit hydraulique de fermeture 38 de la porte 23.

L'opération d'éjection des balles s'effectue de la façon suivante: lorsque le ficelage de la balle est terminé en fin de constitution de la balle 9 (figure 1) l'opérateur arrête la prise de force du tracteur et commande, par le circuit 37 (figure 4) et les vérins (25), l'ouverture de la porte 23.

Simultanément, le relevage de la machine s'effectue par l'intermédiaire du clapet piloté 40 qui permet d'agir en même temps sur les vérins 20. Le point d'articulation 29 des rampes 30 est également relevé, alors que les rampes restent dans la position représentée en trait interrompu à la figure 6.

Ensuite, lors du roulement de la balle 24 sur les rampes 30 (figure 2), ceux-ci s'abaissent sous le poids de la balle pour occuper la position inclinée en trait plein sur la figure 6 en comprimant le ressort 36.

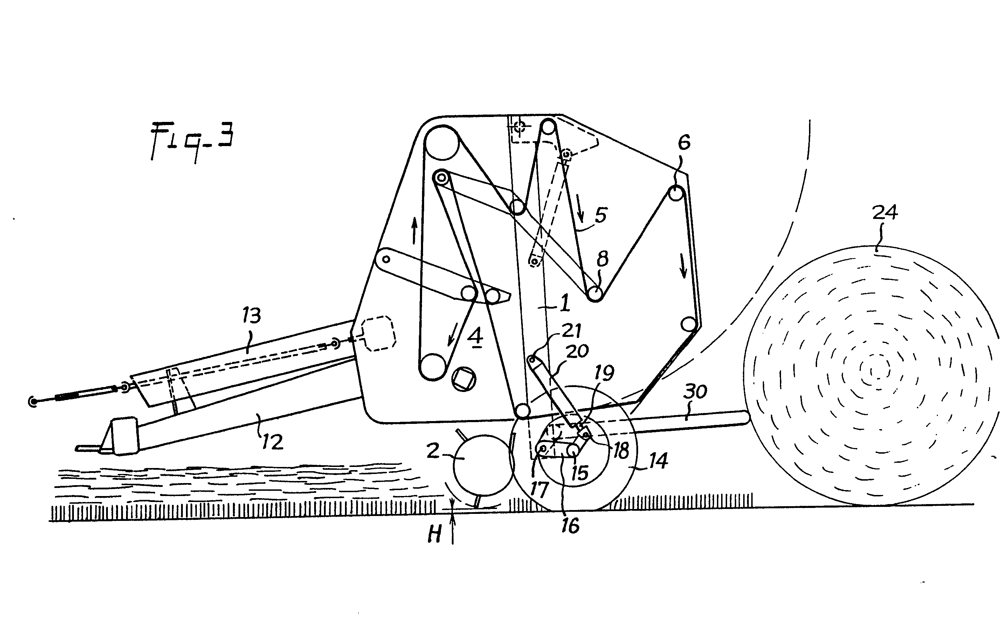

Le relevage du châssis 1 et du point d'articulation 29 des rampes 30 permet d'avoir une plus grande inclinaison pour faciliter le roulage de la balle 24. De ce fait, la balle roule suffisamment loin de telle sorte qu'il est possible de refermer la porte 23 sans avoir à faire avancer le tracteur (figure 3).

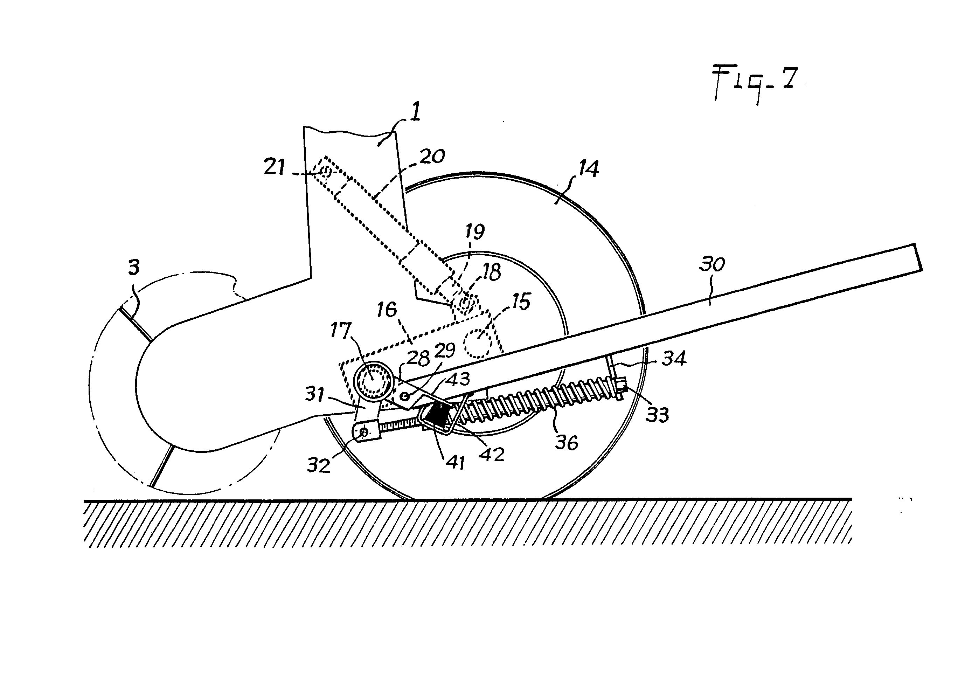

Lorsque la balle est éjectée, les rampes 30 reviennent à leur position initiale (figures 3 et 7) sous l'action des ressorts 36. La longueur des rampes 30 est prévue de telle sorte qu'il est possible de fermer la porte 23 sans endommager la balle, celle-ci venant en appui sur l'extrémité des rampes (figure 3).

Lors de la fermeture de la porte 23 par les vérins 25, le circuit hydraulique 38 de fermeture agit sur le clapet piloté 40 et permet la commande des vérins 20 qui commandent l'abaissement du châssis 1 afin que la machine reprenne sa position initiale (figures 1 et 7) pour le ramassage du foin et la formation d'une nouvelle balle.

Toutefois, le relevage de la machine ou le réglage de la hauteur de ramassage par rapport au sol est possible en agissant sur le distributeur simple effet qui commande les vérins 20 seulement.

A la figure 5, est représentée une variante du circuit hydraulique qui comporte, à la place du clapet piloté 40, un distributeur 45 à commande électrique qui actionne les vérins de relevage 20 de machine lorsque les vérins 25 d'ouverture de porte sont actionnés. Un interrupteur 42 de contrôle de verrouillage de la porte ferme le circuit électrique de commande lorsque la porte est déverrouillée et ainsi actionne le distributeur 45 à commande électrique.

Bien entendu, l'invention n'est pas limitative et l'homme de l'art pourra y apporter des modifications sans sortir pour cela du domaine des revendications.

## Revendications

1. Dispositif pour l'éjection de balles de fourrage sur une presse à balles rondes destinée à être remorquée par un véhicule tracteur, ladite presse comprenant un châssis mobile (1) portant à sa partie inférieure un organe rotatif (2) de ramassage du fourrage et à sa partie supérieure des moyens (5, 6) de formation de la balle, le châssis (1) étant monté sur une paire de roues (14) en contact avec le sol, par l'intermédiaire de premiers leviers (16) disposés de chaque côté du châssis, chaque premier levier (16) étant articulé à une de ses extrémités sur un axe d'articulation (17) du châssis et à son autre extrémité sur une extrémité d'un vérin (19, 20) de relevage du châssis, dont l'autre extrémité est articulée sur le châssis (1), et le levier (16) portant dans sa partie centrale l'une des roues (14), ledit dispositif d'éjection étant caractérisé en ce qu'il comprend un second levier (28, 31), monté sur l'axe d'articulation (17) du premier levier (16), présentant un premier bras (28) sur lequel est articulée l'une des extrémités d'une rampe (30) de roulement de la balle et un second bras (31) décalé angulairement par rapport au premier (28) et sur lequel est articulée une tige (33) montée coulissante dans un organe de guidage (34) fixé sur la rampe (30) de roulement, ladite tige (33) portant une butée (35) contre laquelle est en appui l'une des extrémités d'un ressort (36) disposé autour de la tige (33), l'autre extrémité du ressort étant en appui contre l'organe de guidage (34).

2. Dispositif suivant la revendication 1, caractérisé en ce qu'une butée élastique (41) est fixée latéralement à la rampe (30) sur un support (42) soudé sur ladite rampe, de façon à pouvoir venir en appui sous un prolongement (43) du premier bras (28) lorsque la rampe (30) est en position relevée.

3. Dispositif selon l'une des revendications 1 et 2, caractérisé en ce que la longueur de la tige (33) est réglable grâce à une partie filetée (44) qui s'articule sur le second bras (31) et se visse dans la tige (33) du côté de la butée (35).

4. Dispositif selon l'une des revendications 1 à 3, caractérisé en ce que la porte (23) de fermeture de l'enceinte de formation de la balle est commandée par deux vérins (25) à double effet alimentés par deux circuits hydrauliques (37, 38) qui commandent un clapet piloté (40) monté sur un circuit hydraulique (39) de commande des vérins (20) à double effet de relevage du châssis (1).

5. Dispositif selon l'une des revendications 1 à 3, caractérisé en ce que la porte (23) de fermeture de l'enceinte de formation de la balle est commandée par deux vérins (25) à double effet alimentés par deux circuits hydrauliques (37, 38) qui commandent, par l'intermédiaire d'un distributeur (45) monté sur un circuit hydraulique (39), des vérins (20) à simple effet de relevage du châssis, ledit distributeur (45) étant actionné électriquement par un interrupteur (42) de contrôle de verrouillage de la porte (23).

## Patentansprüche

1. Vorrichtung zum Auswerfen von Futtermittelballen auf einer Rundballenpresse, die dazu bestimmt ist, von einem Traktorfahrzeug gezogen zu werden, wobei die Presse ein bewegliches Chassis (1) aufweist, das an seinem unteren Bereich ein Drehorgan (2) zum Sammeln des Futtermittels und an seinem oberen Bereich Einrichtungen (5, 6) zum Bilden des Ballens aufweist, wobei das Chassis (1) auf einem Räderpaar (14), das in Berührung mit dem Boden ist, mittels erster Hebel (16) angeordnet sind, die auf jeder Seite des Chassis angeordnet sind, wobei jeder erste Hebel (16) an einem seiner Enden auf einer Gelenkachse (17) des Chassis und an seinem anderen Ende am Ende eines Hebetriebs (19, 20) des Chassis angelenkt ist, dessen anderes Ende an dem Chassis (1) angelenkt ist, und der Hebel (16) in seinem Mittenbereich eines der Räder (14) trägt, wobei die genannte Auswurfvorrichtung dadurch gekennzeichnet ist, daß sie einen zweiten Hebel (28, 31) aufweist, der auf einer Gelenkachse (17) des ersten Hebels (16) montiert ist, wobei er einen ersten Arm (28) auf dem eines der Enden einer Rampe (30) zum Rollen des Ballens angelenkt ist, und einen zweiten Arm (31) aufweist, der winkelig versetzt bezüglich des ersten (28) angeordnet ist, und auf dem eine Stange (33) angelenkt ist, die gleitbeweglich in einem Führungsorgan (34) angeordnet ist, das an der Rollrampe (30) befestigt ist, wobei die Stange (33) einen Anschlag (35) aufweist, gegen den eines der Enden einer Feder (36) andrückt, die um die Stange (33) angeordnet ist, wobei das andere Ende der Feder in Andruck gegen das Führungsorgan (34) ist.

2. Vorrichtung nach Anspruch 1, dadurch gekennzeichnet, daß ein elastischer Anschlag (41) seitlich an der Rampe (30) auf einem Support (42) befestigt ist, der auf die Rampe geschweißt ist, derart, daß er in Andruck unter einer Verlängerung (43) des ersten Arms (28) kommen kann, wenn die Rampe (30) in angehobener Stellung ist.

3. Vorrichtung nach Anspruch 1 oder 2, dadurch gekennzeichnet, daß die Länge der Stange (33) mittels eines Gewindebereichs (44) einstellbar ist, der an dem zweiten Arm (31) gelenkig ist und sich in die Stange (33) auf der Seite des Anschlags (35) einschraubt.

4. Vorrichtung nach einem der Ansprüche 1 bis 3, dadurch gekennzeichnet, daß die Schließpforte (23) des Ballenbildungsraums durch zwei Stelltriebe (25) mit doppelter Wirkung betätigt wird, die von zwei Hydraulikkreisen (37, 38) gespeist werden, die ein Klappenventil (40) fernsteuern, das in einem Hydraulikkreis (39) der Steuerung der doppelwirkenden Stelltriebe (20) zum Anheben des Chassis (19) angeordnet ist.

5. Vorrichtung nach einem der Ansprüche 1 bis 3, dadurch gekennzeichnet, daß die Pforte (23) zum Schließen des Ballenbildungsraums durch zwei Stelltriebe (25) mit doppelter Wirkung betätigt wird, die durch zwei hydraulische Kreise (37, 38) gespeist werden, die mittels eines Verteilers (45), der in einem Hydraulikkreis (39) angeordnet ist, einfachwirkende Stelltriebe (20) zum Anheben des Chassis betätigen, wobei der Verteiler (45) elektrisch durch einen Schalter (42) zur Steuerung des Verriegelns der Pforte (23) betätigt wird.

**Claims**

1. Device for the ejection of fodder bales on a round-bale press intended to be towed by a tractor vehicle, the said press comprising a movable frame (1) carrying a rotary fodder pick-up member (2) in its lower part and bale-forming means (5, 6) in its upper part, the frame (1) being mounted on a pair of wheels (14) in contact with the ground, by means of first levers (16) arranged on each side of the frame, each first lever (16) being articulated, at one of its ends, on a pivot axle (17) of the frame and, at its other end, on one end of a frame-raising jack (19, 20), the other end of which is articulated on the frame (1), and the lever (16) carrying in its central part one of the wheels (14), the said ejection device being characterized in that it comprises a second lever (28, 31) mounted on the pivot axle (17) of the first lever (16) and having a first arm (28), on which one of the ends of a bale-rolling ramp (30) is articulated, and a second arm (31) which is offset angularly relative to the first (28) and on which is articulated a rod (33) mounted slidably in a guide member (34) fastened to the rolling ramp (30), the said rod (33) carrying a stop (35), against which bears one of the ends of a spring (36) arranged round the rod (33), the other end of the spring bearing against the guide member (34).

2. Device according to Claim 1, characterized in that an elastic stop (41) is fastened laterally to the ramp (30) on a support (42) welded to the said ramp, so as to be capable of coming to bear under an extension (43) of the first arm (28) when the ramp (30) is in the raised position.

3. Device according to one of Claims 1 and 2, characterized in that the length of the rod (33) is adjustable by means of a threaded part (44) which is articulated on the second arm (31) and which is screwed into the rod (33) on the same side as the stop (35).

4. Device according to one of Claims 1 to 3, characterized in that the door (23) for closing the bale-forming enclosure is controlled by two double-acting jacks (25) fed by two hydraulic circuits (37, 38) which control a pilot valve (40) mounted on a hydraulic circuit (39) for the control of the double-acting jacks (20) for raising the frame (1).

5. Device according to one of Claims 1 to 3, characterized in that the door (23) for closing the bale-forming enclosure is controlled by two double-acting jacks (25) fed by two hydraulic circuits (37, 38) which control single-acting frame-raising jacks (20) by means of a distributor (45) mounted on a hydraulic circuit (39), the said distributor (45) being actuated electrically by means of a switch (42) for controlling the locking of the door (23).

Fig.1

Fig-2

Fig-3

3

Fig-4

4

Fig-5

Fig.6

EP 0 206 889 B1

Fig.2

EP 0 206 889 B1